# EUROPEAN PATENT SPECIFICATION

(11) **EP 3 714 677 B1**
(45) Date of publication and mention of the grant of the patent: **19.10.2022**
(21) Application number: 19166348.3
(22) Date of filing: 29.03.2019
(51) Int. Cl.: A01D 75/00

(54) **HEADER TRANSPORT SYSTEM**
ERNTEVORSATZTRANSPORTSYSTEM
SYSTÈME DE TRANSPORT DE TÊTE DE RÉCOLTE DE MOISSONNEUSE

(43) Date of publication of application: 30.09.2020
(73) Proprietor: CNH Industrial Belgium NV, 8210 Zedelgem (BE)
(72) Inventor: Tack, Johan, 8720 Dentergem-Oeselgem (BE)
(74) Representative: CNH Industrial IP Department

(56) References cited:
- AT-A4- 505 650
- CA-A- 1 188 899
- US-B1- 7 197 865
- US-B2- 8 292 328

## Description

### BACKGROUND OF THE INVENTION

The present invention relates to headers for agricultural vehicles, and, more specifically to a header with an integrated transport system.

An agricultural harvester known as a "combine" is historically termed as such because it combines multiple harvesting functions, such as picking, threshing, separating, and cleaning, in a single harvesting unit. Generally, a combine includes a chassis, a prime mover, a feeder housing, a header, a threshing system, and a cleaning system. The header removes crop material from the field and transports it to the feeder housing. The threshing system may include an axially displaced threshing rotor and a perforated rotor housing, which can be composed of adjustable concaves. As the threshing rotor rotates within the rotor housing, the threshing rotor provides positive crop movement and performs a threshing operation on the crop material to remove the grain. Once the grain is threshed, the grain falls through the perforations in the rotor housing and is subsequently cleaned by the cleaning system. The cleaning system includes a cleaning fan which blows air through oscillating sieves to discharge chaff and other debris toward the rear of the combine. Nongrain crop material or material other than grain (MOG), such as straw, from the threshing and cleaning systems proceeds through a straw chopper and out the rear of the combine. Clean grain is transported, by a clean grain auger, to a grain tank onboard the combine.

A typical header generally includes a frame, a cutter to remove crop material from the field, and a conveyor to transport the cut crop material to the feeder housing for further downstream processing in the combine. Generally, these features of a header are specifically optimized to harvest a particular kind of crop material. For instance, the header may be in the form of a draper header which has a cutter bar, a draper belt, and a rotating reel with tines or the like in order to harvest a bushy or fluffy crop material, such as soy beans or canola. Alternatively, the header may be in the form of a corn header which includes an auger and row units with snouts, gathering chains, and stalk rolls in order to harvest corn.

Generally, due to the augmented size and weight of large headers, the header must be transported separately from the combine such that the header is towed lengthwise to conform to relatively narrow roadways. To transport the header, a separate transport trailer can be used to support the header, or alternatively, the header itself may include an integrated transport assembly.

From U.S. Patent No. 8,870,210 it is known to transport a header with a transport trailer which has an all-wheel 180-degree steering system. The steering system of the transport trailer has front and rear steering linkages to oscillate all four wheels. The steering system also includes a 180-degree pivoting tongue, which is pivotally coupled to the front frame and front steering linkage.

An integrated transport assembly may include a tongue and wheels detachably or pivotally connected to the header frame. From U.S. Patent No. 5,243,810 it known to transport a header with an integrated transport assembly that includes a detachable tongue and pivotally attached wheels that selectively rotate from behind and adjacent to the rear wall of the header frame to underneath the header frame in order to support the header in the transport position. The rear axle of the rear wheels is pivotally connected to a rotating arm such that the axle is parallel with and tucked behind the rear wall of the header frame in the field-working position.

The Austrian patent application No. AT 505 650 A4 discloses a header that is supported by two wheels that can both be pivoted over an angle of 90 degrees to move between a transport position and a field position. Two further wheels only support the header when in the transport position. In the field, the additional wheels are pivoted away from the field and to the side of the header.

The Canadian patent application No. CA 1 188 899 A discloses a header with a single pivotable wheel at one end of the header and an axle with two wheels at the other end of the header. A pivot axis near one of the wheels on the axle allows for pivoting the axle over 90 degrees between a transport configuration and a field configuration.

It is generally undesirable to transport a header with a separate transport trailer since the operator must purchase, maintain, and tow a separate piece of equipment just to transport the header from one location to another. Although integrated transport assemblies are more convenient than transport trailers, such assemblies may not be able to adequately support the weight of large headers during transport. The support wheels of integrated transport assemblies may be too small with an insufficient weight-bearing capacity due to the size constraints of the wheels since they must generally be stored within or behind the header frame in the field-working position. Furthermore, in the field-working position, the combine itself may not adequately support the weight of large headers.

What is needed in the art is an easy-to-use, integrated transport assembly that can adequately support large headers in both of the transport and field-working positions.

### SUMMARY OF THE INVENTION

The present invention provides a header with the features of claim 1. Further preferred embodiments are defined by the dependent claims.

The header includes a frame, at least one axle assembly connected to the frame and positionable in between a transport position and a field-working position, the at least one axle assembly comprising an axle with a first end and a second end, and a pair of wheels respectively connected to the first and second ends of the axle. The at least one axle assembly includes a telescoping mount connected to the frame, an axle support member rotatably connected to the telescoping mount, and an axle slideably connected to the axle support member. The axle rotates and slides relative to the frame and the wheels are configured for at least partially supporting the header in the transport position and the field-working position.

In one exemplary embodiment, the frame of the header defines a longitudinal axis and the axle defines an axle longitudinal axis. The axle longitudinal axis is parallel with the longitudinal axis of the frame in the field-working position, and the axle longitudinal axis is perpendicular to the longitudinal axis of the frame in the transport position.

In another exemplary embodiment, the axle has a first end and a second end. The wheels are respectively connected to the first and second ends of the axle. The axle slides relative to the axle support member such that the axle is approximately centered about the telescoping mount in the field-working position and the second end of the axle is closer to the telescoping mount than the first end in the transport position.

In yet another exemplary embodiment, the axle has at least two indexed positions including a first hole located at an approximate midpoint between the first end and second end of the axle and a second hole located adjacent to the second end of the axle. The axle support member includes a hole located adjacent to the axle.

In yet another exemplary embodiment, the at least one axle assembly further includes an axle pin. The axle pin is inserted through the first hole of the axle and the hole of the axle support member in the field-working position and the axle pin is inserted through the second hole of the axle and the hole of the axle support member in the transport position.

In yet another exemplary embodiment, the telescoping mount further includes a hole and the axle support member further comprises another hole located adjacent to the telescoping mount and corresponding to the hole of the telescoping mount. The at least one axle assembly further includes a telescoping-mount pin insertable through the hole in the telescoping mount and the corresponding hole of the axle support member to selectively prevent a rotation of the axle support member relative to the telescoping mount.

In yet another exemplary embodiment, the telescoping mount extends for allowing the axle, and the wheels attached thereto, to rotate underneath and relative to the frame in between the field-working and transport positions.

In yet another exemplary embodiment, the telescoping mount includes an actuator internally disposed within a housing.

In yet another exemplary embodiment, the frame includes a left end and a right end. The at least one axle assembly includes a left axle assembly and a right axle assembly respectively located adjacent to the left and right ends of the frame. The header further comprises a left pair of wheels connected to the left axle assembly and a right pair of wheels connected to the right axle assembly.

In yet another exemplary embodiment, the header further includes a fluid reservoir and a left fluid cylinder operably coupled with the fluid reservoir and connected to the left axle assembly and a right fluid cylinder operably coupled with the fluid reservoir and connected to the right axle assembly. The left and right fluid cylinders act in an opposing manner for steering the wheels in the transport position.

In yet another exemplary embodiment, the fluid reservoir is closed in the transport position such that the left and right fluid cylinders are fluidly coupled in the opposing manner for steering the wheels in the transport position. The fluid reservoir is open in the field-working position such that left and right fluid cylinders are fluidly coupled in a free-flow manner so that the wheels of the left and right axle assemblies operate in tandem in the field-working position.

In yet another exemplary embodiment, the header further includes a draw bar removably connected to the left axle assembly, in the transport position, and a linkage system including a left linkage bar connected in between the draw bar and the left axle assembly and a right linkage bar connected to the right axle assembly.

In yet another exemplary embodiment, the left axle assembly includes a left actuator and the right axle assembly comprises a right actuator. The left and right actuators steer the left and right wheels of the left and right axle assemblies, respectively, in tandem with one another in the field-working position.

In yet another exemplary embodiment, the header further includes an electronic control unit operably connected to the left and right actuators of the left and right axle assemblies. The electronic control unit is configured for automatically turning the left and right wheels of the left and right axle assemblies in connection with a movement of the agricultural vehicle.

In yet another exemplary embodiment, the left axle assembly further includes a left sensor connected to the left actuator and the right axle assembly further includes a right sensor connected to the right actuator. Each sensor is operably connected to the electronic control unit and sends a respective position signal to the electronic control unit.

An advantage of the present invention is that the transport system of the header may be integrated into the axle assemblies of the header so that the header is adequately supported by the axle assemblies, and wheels attached thereto, in both of the transport position and field-working position.

Another advantage is that an operator may easily and quickly rotate and/or slide the axle relative to the frame of the header to position the axle underneath perpendicular to the header in the transport position or behind and parallel with the header in the field-working position.

Yet another advantage is that the wheels attached to each axle of the header may help to steer the header in both of the transport position and field-working position.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a schematic view of an agricultural vehicle and a header in a field-working position, the header includes a transport system with left and right wheel axle assemblies which support the header during transportation and an in-field operation in the field-working position;
FIG. 2 is a schematic view of the transport system of the header of FIG. 1 when the header is in a transport position;
FIG. 3 is a side view of an axle assembly of the transport system in the transport position;
FIG. 4 is a side view of an axle assembly of the transport system in the field-working position; and
FIG. 5 is a diagram of a method for positioning the transport system of the header in the transport position and the field-working position.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "forward", "rearward", "left" and "right", when used in connection with the agricultural vehicle and/or components thereof are usually determined with reference to the direction of forward operative travel of the agricultural vehicle, but again, they should not be construed as limiting. The terms "longitudinal" and "transverse" are determined with reference to the fore-and-aft direction of the agricultural vehicle and are equally not to be construed as limiting. As used herein, the term "transport position" may refer to a position of the header and/or components thereof when the header is, or will be, disconnected and moved separately from the agricultural vehicle, for example during transportation of the header along a roadway, and the term "field-working position" may refer to a position of the header and/or components thereof when the header is connected to the agricultural vehicle, for example during a field-working operation of the header and/or agricultural vehicle.

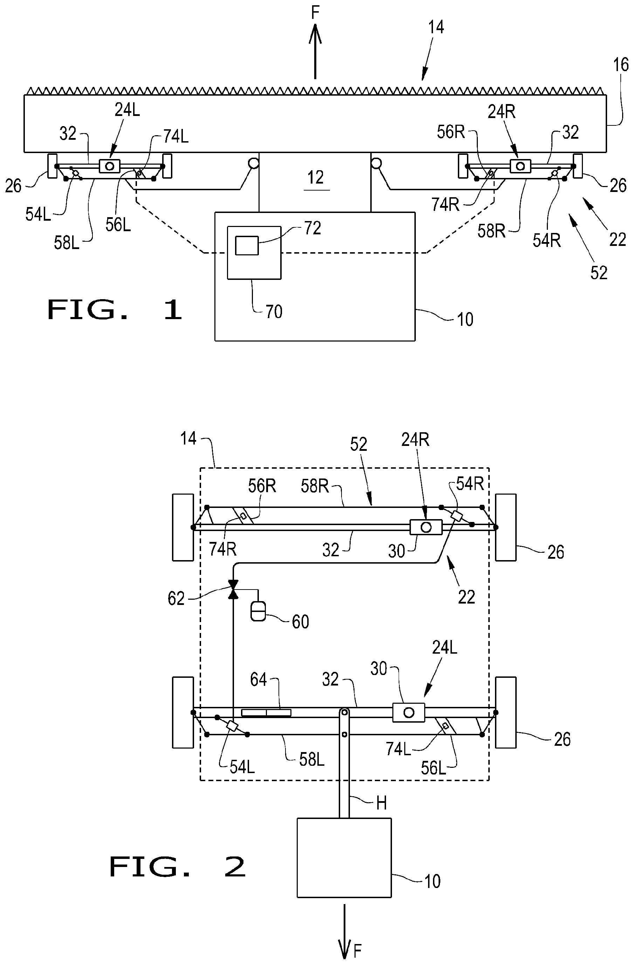

Referring now to the drawings, and more particularly to FIGS. 1-4, there is shown an agricultural vehicle 10. The agricultural vehicle 10 generally includes a chassis, wheels, a prime mover, a feeder housing 12, a threshing and separating system, a cleaning system, and a header 14 removably attached to the feeder housing 12. The agricultural vehicle 10 may be in the form of any desired agricultural vehicle 10 such as a combine, tractor, or windrower.

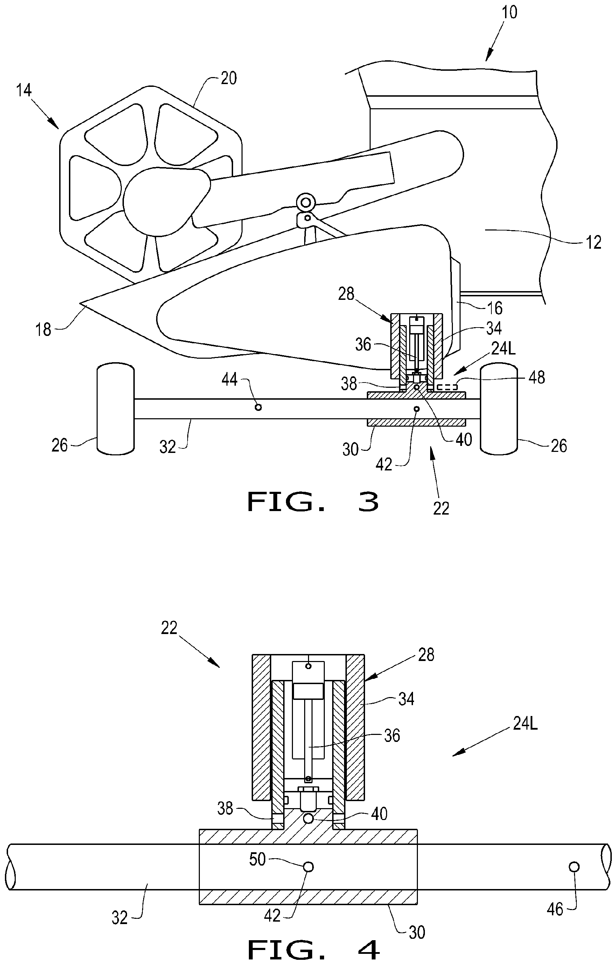

The header 14 may be in the form of any desired header, such as a corn header or draper header. As shown, the header 14 is in the form of a draper header 14 which generally includes a frame 16, a cutter bar 18, a draper belt and/or auger, a reel assembly 20, and a transport system 22 with at least one axle assembly 24L, 24R (FIG. 3). The header 14 is positionable in a field-working position (FIG. 1) and a transport position (FIG. 2). In the field-working position, the header 14 is connected to the feeder housing 12, and the agricultural vehicle 10 and the header 14 move together in a forward direction of travel "F" to perform an operation, such as harvesting a crop, in a field. In the field-working position, the longitudinal axis of the header 14 is perpendicular to the direction of travel F. In the transport position, the header 14 is disconnected from the feeder housing 12, and the agricultural vehicle 10, e.g. combine or tractor, may tow the header 14, via a detachable draw bar or hitch H, in the forward direction of travel F to move the header 14 from one location to another location. In the transport position, the longitudinal axis of the header 14 is parallel to the direction of travel F.

The transport system 22 is connected to the frame 16 of the header 14 in the transport and field-working positions. The transport system 22 includes at least one axle assembly 24L, 24R with a pair of wheels 26 rotatably attached to the at least one axle assembly 24L, 24R. Thereby, the at least one axle assembly 24L, 24R, and the wheels 26 attached thereto, at least partially support the header in both of the transport and field-working positions. As shown, the transport system 22 includes left and right axle assemblies 24L, 24R that are positioned adjacent to the left and right ends of the frame 16, respectively. However, the transport system 22 may include only one axle assembly or multiple axle assemblies, such as two, three, or more axle assemblies. For example, the transport system 22 may include one axle assembly located at one end of the header 14 and a removable wheel connected to the other end of the header 14 (not shown). The transport system 22 may be attached to any header.

Each axle assembly 24L, 24R is connected to the frame 16 and selectively positionable in between a transport position (FIG. 3) and a field-working position (FIG. 4). Each axle assembly 24L, 24R is configured to rotate and slide so that the wheels 26 are parallel to the direction of travel F in both of the transport and field-working positions. Each axle assembly 24L, 24R includes a telescoping mount 28, an axle support member 30, and an axle 32 (FIGS. 3-4). Each axle assembly 24L, 24R may be manually and/or automatically positioned in between the transport and field-working positions. For brevity of description, only the left axle assembly 24L is shown in FIGS. 3-4 and described below. Yet, it should be appreciated that each axle assembly 24L, 24R may be substantially identical.

The telescoping mount 28 of each axle assembly 24L, 24R can be interconnected between the underside of the frame 16 and the axle support member 30. The telescoping mount 28 may include ball bearings, fasteners, and/or grooves in order to rotatably mount the axle support member 30. The telescoping mount 28 may also include a telescoping housing 34 and an actuator 36, in the form of a piston 36, internally disposed within the housing 34. The telescoping mount 28 may extend downwardly to move the axle 32 farther away from the bottom of the frame 16 and retract to move the axle 32 closer to the bottom of the frame 16. Hence, when the telescoping mount 28 extends, the axle 32 and the wheels 26 attached thereto of each axle assembly 24L, 24R may be allowed, i.e., given sufficient clearance, to rotate underneath and relative to the frame 16 in between the field-working and transport positions. It should be appreciated that the telescoping mount 28 of each axle assembly 24L, 24R may instead be in the form of a rod or a cylinder without a telescoping housing (not shown).

The telescoping housing 34 may be in the form of a two-part housing with one end connected to the frame and the other end connected to the axle support member 30. The telescoping housing 34 may include at least one through-hole 38 which is located adjacent to the axle support member 30. The piston 36 may be in the form of any desired piston, for example, the piston 36 may be in the form a hydraulic or pneumatic piston. It should be appreciated that FIGS. 3-4 illustrate a cross-section of the telescoping mount 28 for ease of understanding; however, the telescoping housing 34 can be tubular and may substantially house the piston 36.

The axle support member 30 is rotatably connected to the telescoping mount 28. Additionally, the axle support member 30 mounts the axle 32. For instance, the axle support member 30 can be in the form of a sliding bushing, which slideably mounts the axle 32. The axle support member 30 may have an inverted "T" cross-section such that the round base of the axle support member 30 is rotatably connected to the telescoping mount 28 and the lower portion of the axle support member 30 is a cylindrical shell that slideably receives the axle 32. The axle support member 30 may rotate at least 90 degrees, and up to 360 degrees, in a clockwise or counter-clockwise direction. The axle support member 30 may also include at least one upper hole 40 and a lower hole 42. The axle support member 30 may have a pair of upper holes 40, which are transverse to one another and located adjacent to the telescoping mount 28. The upper holes 40 correspond with the hole 38 of the telescoping mount 28. The lower hole 42 is located adjacent to the axle 32. The axle support member 30 may comprise any desired material, such as metal.

The axle 32 is slideably connected to the axle support member 30 such that the axle 32 rotates and slides relative to the frame 16 of the header 14. The axle 32 defines an axle longitudinal axis and includes a first end and a second end, which respectively mount the wheels 26. The axle longitudinal axis is parallel with the longitudinal axis of the frame 16 of the header 14 in the field-working position (FIG. 1) and perpendicular to the longitudinal axis of the frame 16 of the header 14 in the transport position (FIG. 2). In other words, the axle 32 may be in line with the back wall of the frame 16 of the header 14 in the field-working position, and the axle 32 may be perpendicular to the back wall of the frame 16 of the header 14 in the transport position. The axle 32 slides relative to the axle support member 30 so that the axle 32 may be centered in the field-working position (FIGS. 1 and 4) and off-center in the transport position (FIGS. 2-3) to evenly distribute the weight of the header 14. For example, the axle 32 can be approximately centered, plus or minus 30 cm, or approximately 1 ft., on the telescoping mount 28 in the field-working position. Also, for example, one end of the axle 32 may be closer to the telescoping mount 28 than the other end in the transport position. The axle 32 may also include at least two holes 44, 46, for example, a centered hole 44 located at an approximate midpoint of the axle 32 and an off-center hole 46 located adjacent to one end of the axle 32. Hence, the axle 32 may have at least two indexed positions by way of the two or more holes 44, 46 which provide the indexed positions for positioning the axle 32 relative to the telescoping mount 28.

In order to manually position and secure the axle assemblies 24L, 24R, each axle assembly 24L, 24R may additionally include a telescoping-mount pin 48 (FIG. 3) and an axle pin 50 (FIG. 4). The telescoping-mount pin 48 may be inserted through the hole 38 in the telescoping mount 28 and the corresponding hole 40 of the axle support member 30 to selectively prevent a rotation of the axle support member 30 relative to the telescoping mount 28. The axle pin 50 may be inserted through the centered hole 44 of the axle 32 and the hole 42 of the axle support member 30 in the field-working position. The axle pin 50 may also be inserted through the off-center hole 46 of the axle 32 and the hole 42 of the axle support member 30 in the transport position.

According to an aspect of the present invention, the wheels 26 of each axle assembly 24L, 24R of the transport system 22 may be individually steerable in both of the transport and field-working positions. The header 14 may additionally include a linkage system 52 and at least one actuator 54L, 54R, 56L, 56R associated with each axle assembly 24L, 24R (FIGS. 1-2).

The linkage system 52 generally includes a left linkage bar 58L hingedly connected in between the hitch H and the wheels 26 of left axle assembly 24L and a right linkage bar 58R hingedly connected to the wheels 26 of the right axle assembly 24R. It should be appreciated that the linkage system 52 may be incorporated as part of the transport system 22.

The at least one actuator 54L, 54R, 56L, 56R may be in the form of a set of left and right fluid cylinders 54L, 54R, such as hydraulic cylinders 54L, 54R, for steering the wheels 26 of each axle assembly 24L, 24R in the transport position, and an additional set of left and right electric actuators 56L, 56R, such as electric cylinders or servomotors, for steering the wheels 26 of each axle assembly 24L, 24R in the field-working position. The fluid cylinders 54L, 54R may be operably coupled to one another and/or an accompanying fluid reservoir, e.g. an accumulator 60, with a valve 62, via a fluid line. Alternatively, the header 14 may only include one set of actuators, e.g., pneumatic, hydraulic, and/or electric cylinders or motors, associated with each axle assembly 24L, 24R, that may steer the wheels 26 of each axle assembly 24L, 24R in both of the transport and field-working positions. For instance, the single set of actuators may be hydraulic cylinders which are fluidly coupled to the accumulator 60 and/or the agricultural vehicle 10. It should be appreciated that the actuators 54L, 54R, 56L, 56R may be in the form of any desired actuators, such as hydraulic, pneumatic, electric cylinders or motors. Each actuator 54L, 54R, 56L, 56R of the axle assemblies 24L, 24R may be fluidly and/or electrically coupled to the agricultural vehicle 10 via fluid and/or electrical lines.

In more detail, the linkage system 52 and fluid cylinders 54L, 54R may operate together to steer the transport system 22 in the transport position. The fluid cylinders 54L, 54R may be fluidly coupled to one another and disconnected from the accumulator 60, i.e., the accumulator 60 is closed, in the transport position. As the agricultural vehicle 10 tows the header 14, the movement of the hitch H will be translated, by the left linkage bar 58L, onto the wheels 26 of the left axle assembly 24L. As the left linkage bar 58L moves, the fluid cylinder 54L of the left axle assembly 24L will extend or retract, and the change in fluid therein will cause the fluid cylinder 54R of the right axle assembly 24R to retract or extend. Thus, the wheels 26 of the right axle assembly 24R will rotate in an opposite direction from the wheels 26 of the left axle assembly 24L, allowing the transport system 22 to more efficiently turn. Thereby, in the transport position, the fluid cylinders 54L, 54R and the wheels 26 of the axle assemblies 24L, 24R operate in an opposing manner. In the field-working position, the fluid cylinders 54L, 54R may operate in a free-flow manner in which the fluid cylinders 54L, 54R may be connected to each other and the accumulator 60, i.e., the accumulator 60 is open, so that fluid may freely flow to and from the accumulator 60. The electric actuators 56L, 56R may be operably coupled to the steering mechanism of the agricultural vehicle 10 such that the electric actuators 56L, 56R turn the wheels 26 of the axle assemblies 24L, 24R in line with the wheels of the agricultural vehicle 10. Thereby, in the field-working position, the wheels 26 of the axle assemblies 24L, 24R may operate in tandem with each other to turn in the same direction.

According to an aspect of the present invention, the header 14 may also include an electronic control unit (ECU) 70, which has a memory 72, and at least one sensor 74L, 74R associated with each axle assembly 24L, 24R (FIGS. 1-2). The ECU 70 and sensors 74L, 74R may be configured for automatically turning the wheels 26 of the left and right axle assemblies 24L, 24R in connection with a movement of the agricultural vehicle 10 and/or for automatically repositioning the axle assemblies 24L, 24R in between the transport and field-working positions. It should be appreciated that the ECU 70 and left and right sensors 74L, 74R may be incorporated as part of the axle assemblies 24L, 24R of the transport system 22.

The ECU 70 may be in the form of any desired controller 70. The ECU 70 may be a separate device or incorporated into the existing control system(s) of the agricultural vehicle 10 and/or header 14. The ECU 70 may be operably coupled to the left and right actuators 56L, 56R and the sensors 74L, 74R in order to selectively control the position of the wheels 26 in the field-working position. For example, as the agricultural vehicle 10 turns around at the end of a row, the ECU 70 may control the actuators 56L, 56R to turn the wheels 26 of the header 14 in line with the turning procedure of the agricultural vehicle 10; thereby, it may not be necessary to lift the header 14 above the ground since the header 14 is supported and steerable throughout the end-of-row turn.

Each sensor 74L, 74R may be operably connected to the ECU 70. The left and right sensors 74L, 74R can be respectively connected to, or incorporated within, the left and right actuators 56L, 56R. Alternatively, the sensors 74L, 74R may be coupled to a respective wheel 26 of each axle assembly 24L, 24R. Each sensor 74L, 74R may send a respective position signal, for example indicating a position of the left and right actuators 56L, 56R, to the ECU 70. The transport system 22 may include more than two sensors, such as multiple sensors respectively connected to one or more wheels 26, each telescoping mount 28, support member 30, axle 32, linkage bar 58L, 58R, fluid cylinder 54L, 54R, and/or actuator 56L, 56R. It should be appreciated that the header 14 may not include sensors, and thereby the ECU 70 may adjust the wheels 26 of each axle assembly 24L, 24R in the field-working position or reposition the axle assemblies 24L, 24R without utilizing feedback control.

According to an alternative exemplary embodiment of the present invention, the axle assemblies 24L, 24R may be automatically positioned into the transport position and field-working position by way of the ECU 70 and additional actuators and/or motors coupled to the axle support members 30 and/or axles 32 (not shown). For instance, each axle assembly 24L, 24R may additionally include a first motor to rotate the axle support member 30 and a second motor to slide the axle 32 relative to the axle support member 30. In this regard, the ECU 70 may be operably coupled to each motor, piston 36 of the telescoping mount 28, fluid cylinder 54L, 54R, and/or actuator 56L, 56R.

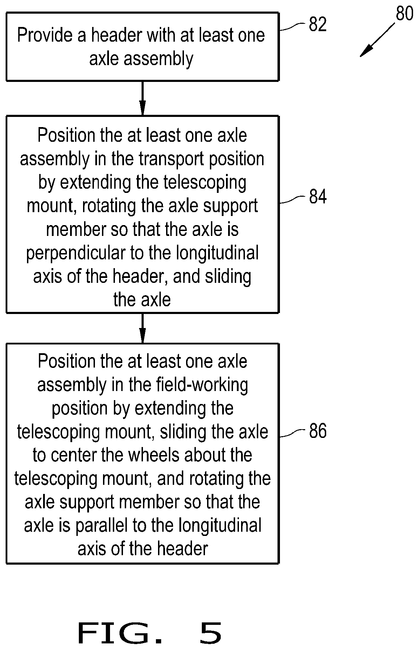

Referring now to FIG. 5, there is shown a diagram of a method 80 for positioning at least one of the axle assemblies 24L, 24R into the transport position and field-working position. The method 80 may be performed by an operator who manually positions the axle assemblies 24L, 24R and/or by the ECU 70 which automatically positions the assemblies 24L, 24R. The method 80 may include an initial step of providing at least one axle assembly 24L, 24R, as described above (at block 82). The method 80 may include positioning the at least one axle assembly 24L, 24R in the transport position (at block 84). The method 80 may also include positioning the at least one axle assembly in the field-working position (at block 86).

To position the at least one axle assembly 24L, 24R in the transport position, the header 14 may be initially lifted by the feeder housing 12 to lift the wheels 26 above the ground (at block 84). However, it is conceivable that the header 14 may not be lifted or only partially lifted by the feeder housing 12. Then, the telescoping mount 28 may be extended via the piston 36 so that the wheels 26 have enough clearance to rotate underneath the header 14. Next, the support member 30 may be pivoted relative to the telescoping mount 28 so that the longitudinal axis of the axle 32 is perpendicular to the longitudinal axis of the header 14. For instance, the operator may manually remove the telescoping-mount pin 48, pivot the axle support member 30, and reinsert the telescoping-mount pin 48 into the corresponding holes 38, 40 to relock the axle support member 30 relative to the telescoping mount 28. Next, the axle 32 may be slid left or right in order to approximately center the header 14 in between the wheels 26 of each axle assembly 24L, 24R. For instance, the operator may manually remove the axle pin 50 from the centered hole 44, slide the axle 32, and reinsert the axle pin 50 into the off-center hole 46 to relock the axle 32 relative to the axle support member 30. Then, the telescoping mount 28 may retract to position the axle 32 closer to the underside of the header 14. It should be appreciated that the telescoping mount 28 may not be retracted at all or may not be retracted back to the same height as it was in the field-working position. If the header 14 was lifted, then the header 14 may then be lowered so that the wheels 26 again support the weight of the header 14. The header 14 may also be disconnected from the feeder housing 12. Additionally, the step of positioning the at least one axle assembly in the transport position, may include a step of closing the valve 62, which thereby disconnects the accumulator 60 from the fluid cylinders 54L, 54R, so that the fluid cylinders 54L, 54R actuate in the opposing manner. Furthermore, once each axle assembly 24L, 24R is in the transport position, the hitch H may be connected to the left axle member 24L and the left linkage bar 58L. An operator may also optionally lower a swivel jack 64 to help support the header 14, before the header 14 is towed by the agricultural vehicle 10 (FIG. 2).

To position the at least one axle assembly 24L, 24R in the field-working position, the header 14 may be connected to the agricultural vehicle 10, and the header 14 may be raised by the feeder housing 12 (at block 86). The hitch H may be removed from the left axle assembly 24L and the left linkage bar 58L. Also, the valve 62 may be opened, which connects the accumulator 60 to the fluid cylinders 54L, 54R, so that the fluid cylinders 54L, 54R operate in the free-flow manner. Next, the telescoping mount 28 may be extended if the wheels 26 need more space to rotate and/or slide underneath the header 14. Then, the axle 32 may be slid left or right relative to the axle support member 30 to center the axle 32, and wheels 26 attached thereto, about the telescoping mount 28. For example, the operator may remove the axle pin 50 from the off-center hole 46, slide the axle 32, and reinsert the axle pin 50 into the centered hole 44 to relock in the axle 32 relative to the axle support member 30. Then, the axle support member 30 may be rotated relative to telescoping mount 28 so that the longitudinal axis of the axle 32 is parallel to the longitudinal axis of the header 14. For instance, the operator may remove the telescoping-mount pin 48, pivot the axle support member 30, and reinsert the telescoping-mount pin 48 into the corresponding holes 38, 40 to relock the axle support member 30 relative to the telescoping mount 28 in the field-working position. Next, the telescoping mount 28 may be retracted. Thereby, the wheels 26 of the at least one axle assembly 24L, 24R support and help steer the header 14 in the field-working position. It should be appreciated that the steps of the method 80 may be performed in any desired sequence. For example, to position the at least one axle 24L, 24R in the transport position or field-working position, the sub-step of rotating the axle support member 30 may be performed before or after the sub-step of sliding the axle 32.

It is to be understood that the steps of the method 80 may be manually performed or performed by the ECU 70 upon loading and executing software code or instructions which are tangibly stored on the memory, e.g. a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the ECU 70 described herein, such as the method 80, is implemented in software code or instructions which are tangibly stored on a tangible computer readable medium. The ECU 70 loads the software code or instructions via a direct interface with the computer readable medium or via a wired and/or wireless network. Upon loading and executing such software code or instructions by the ECU 70, the ECU 70 may perform any of the functionality of the ECU 70 described herein, including any steps of the method 80 to reposition each axle assembly 24L, 24R, as described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

While this invention has been described with respect to at least one embodiment, the present invention can be further modified within the scope of this invention, which is solely defined by the appended claims. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A header (14) for an agricultural vehicle (10), comprising:
a frame (16);
at least one axle assembly (24L, 24R) connected to the frame (16) and positionable in between a transport position and a field-working position, the at least one axle assembly (24L, 24R) comprising an axle (32) with a first end and a second end; and
a pair of wheels (26) respectively connected to the first and second ends of the axle (32),
**characterized in that:**
the at least one axle assembly (24L, 24R) comprises:
a telescoping mount (28) connected to the frame (16); and
an axle support member (30) rotatably connected to the telescoping mount (28);
the axle (32) being slideably connected to the axle support member (30) such that the axle (32) rotates and slides relative to the frame (16), and the wheels (26) are configured for at least partially supporting the header (14) in the transport position and the field-working position.

2. The header (14) of claim 1, wherein the frame (16) defines a longitudinal axis, the axle (32) defines an axle longitudinal axis, the axle longitudinal axis is parallel with the longitudinal axis of the frame (16) in the field-working position, and the axle longitudinal axis is perpendicular to the longitudinal axis of the frame (16) in the transport position.

3. The header (14) of claim 2, wherein the axle (32) slides relative to the axle support member (30) such that the axle (32) is approximately centered about the telescoping mount (28) in the field-working position and the second end of the axle (32) is closer to the telescoping mount (28) than the first end in the transport position.

4. The header (14) of claim 3, wherein the axle (32) has at least two indexed positions comprising a first hole (44) located at an approximate midpoint between the first end and second end of the axle (32) and a second hole (46) located adjacent to the second end of the axle (32), and the axle support member (30) comprises a hole (42) located adjacent to the axle (32).

5. The header (14) of claim 4, wherein the at least one axle assembly (24L, 24R) further comprises an axle pin (50), and the axle pin (50) is inserted through the first hole (44) of the axle (32) and the hole (42) of the axle support member (30) in the field-working position and the axle pin (50) is inserted through the second hole (46) of the axle (32) and the hole (42) of the axle support member (30) in the transport position.

6. The header (14) of any one of the preceding claims, wherein the telescoping mount (28) further comprises a hole (38) and the axle support member (30) further comprises another hole (40) located adjacent to the telescoping mount (28) and corresponding to the hole (38) of the telescoping mount (28), and the at least one axle assembly (24L, 24R) further comprising a telescoping-mount pin (48) insertable through the hole (38) in the telescoping mount (28) and the corresponding hole (40) of the axle support member (30) to selectively prevent a rotation of the axle support member (30) relative to the telescoping mount (28).

7. The header (14) of any one of the preceding claims, wherein the telescoping mount (28) extends for allowing the axle (32), and the wheels (26) attached thereto, to rotate underneath and relative to the frame (16) in between the field-working and transport positions.

8. The header (14) of any one of the preceding claims, wherein the telescoping mount (28) comprises an actuator (36) internally disposed within a housing (34).

9. The header (14) of any one of the preceding claims, wherein the frame (16) comprises a left end and a right end, the at least one axle assembly (24L, 24R) comprises a left axle assembly (24L) and a right axle assembly (24R) respectively located adjacent to the left and right ends of the frame (16), and the header (14) further comprises a left pair of wheels (26) connected to the left axle assembly (24L) and a right pair of wheels (26) connected to the right axle assembly (24R).

10. The header (14) of claim 9, further comprising a fluid reservoir (60) and a left fluid cylinder (54L) operably coupled with the fluid reservoir (60) and connected to the left axle assembly (24L) and a right fluid cylinder (54R) operably coupled with the fluid reservoir (60) and connected to the right axle assembly (24R), the left and right fluid cylinders (54L, 54R) act in an opposing manner for steering the wheels (26) in the transport position.

11. The header (14) of claim 10, wherein the fluid reservoir (60) is closed in the transport position such that the left and right fluid cylinders (54L, 54R) are fluidly coupled in the opposing manner for steering the wheels (26) in the transport position, and the fluid reservoir (60) is open in the field-working position such that left and right fluid cylinders (54L, 54R) are fluidly coupled in a free-flow manner so that the wheels (26) of the left and right axle assemblies (24L, 24R) operate in tandem in the field-working position.

12. The header (14) of claim 10, further comprising a draw bar (H) removably connected to the left axle assembly (24L), in the transport position, and a linkage system (52) comprising a left linkage bar (58L) connected in between the draw bar (H) and the left axle assembly (24L) and a right linkage bar (58R) connected to the right axle assembly (24R).

13. The header (14) of any one of claims 9 to 12, wherein the left axle assembly (24L) comprises a left actuator (56L) and the right axle assembly (24R) comprises a right actuator (56R), and the left and right actuators (56L, 56R) steer the left and right wheels (26) of the left and right axle assemblies (24L, 24R), respectively, in tandem with one another in the field-working position.

14. The header (14) of claim 13, further comprising an electronic control unit (70) operably connected to the left and right actuators (56L, 56R) of the left and right axle assemblies (24L, 24R) and configured for automatically turning the left and right wheels (26) of the left and right axle assemblies (24L, 24R) in connection with a movement of the agricultural vehicle (10).

15. The header (14) of claim 14, wherein the left axle assembly (24L) further comprises a left sensor (74L) connected to the left actuator (56L) and the right axle assembly (24R) further comprises a right sensor (74R) connected to the right actuator (56R), and each sensor (74L, 74R) being operably connected to the electronic control unit (70) and sending a respective position signal to the electronic control unit (70).

## Patentansprüche

1. Erntevorsatz (14) für ein landwirtschaftliches Nutzfahrzeug (10) umfassend:
einen Rahmen (16);
mindestens eine Achsanordnung (24L, 24R), die mit dem Rahmen (16) verbunden und zwischen einer Transportposition und einer Feldarbeitsposition positionierbar ist, wobei die mindestens eine Achsanordnung (24L, 24R) eine Achse (32) mit einem ersten Ende und einem zweiten Ende umfasst; und
ein Paar Rädern (26), die mit dem ersten bzw. zweiten Ende der Achse (32) verbunden sind,
**dadurch gekennzeichnet, dass**
die mindestens eine Achsanordnung (24L, 24R) umfasst:
eine teleskopische Befestigung (28), die mit dem Rahmen (16) verbunden ist; und
ein Achs-Stützelement (30), das drehbar mit der teleskopischen Befestigung (28) verbunden ist;
wobei die Achse (32) verschiebbar mit dem Achs-Stützelement (30) verbunden ist, sodass die Achse (32) relativ zum Rahmen (16) rotiert und gleitet, und die Räder (26) dazu eingerichtet sind, den Erntevorsatz (14) in der Transportposition und der Feldarbeitsposition zumindest teilweise abzustützen.

2. Erntevorsatz (14) nach Anspruch 1, wobei der Rahmen (16) eine Längsachse definiert, die Achse (32) eine Achsen-Längsachse definiert, die Achsen-Längsachse in der Feldarbeitsposition parallel zur Längsachse des Rahmens (16) ist, und die Achsen-Längsachse in der Transportposition senkrecht zur Längsachse des Rahmens (16) ist.

3. Erntevorsatz (14) nach Anspruch 2, wobei die Achse (32) relativ zum Achs-Stützelement (30) gleitet, sodass die Achse (32) in der Feldarbeitsposition etwa mittig entlang der teleskopischen Befestigung (28) angeordnet ist und in der Transportposition das zweite Ende der Achse (32) näher an der teleskopischen Befestigung (28) als das erste Ende ist.

4. Erntevorsatz (14) nach Anspruch 3, wobei die Achse (32) mindestens zwei gekennzeichnete Positionen aufweist, die ein erstes Loch (44), das etwa an dem Mittelpunkt zwischen dem ersten Ende und dem zweiten Ende der Achse (32) angeordnet ist, und ein zweites Loch (46), das an das zweite Ende der Achse (32) angrenzend angeordnet ist, aufweisen, und das Achs-Stützelement (30) ein Loch (42) umfasst, das an die Achse (32) angrenzend angeordnet ist.

5. Erntevorsatz (14) nach Anspruch 4, wobei die mindestens eine Achsanordnung (24L, 24R) ferner einen Achsbolzen (50) umfasst und der Achsbolzen (50) in der Feldarbeitsposition durch das erste Loch (44) der Achse (32) und durch das Loch (42) des Achs-Stützelements (30) gesteckt ist und der Achsbolzen (50) in der Transportposition durch das zweite Loch (46) der Achse (32) und durch das Loch (42) des Achs-Stützelements (30) gesteckt ist.

6. Erntevorsatz (14) nach einem der vorherigen Ansprüche, wobei die teleskopische Befestigung (28) ferner ein Loch (38) umfasst und das Achs-Stützelement (30) ferner ein weiteres Loch (40) umfasst, das an die teleskopische Befestigung (30) angrenzend und entsprechend dem Loch (38) der teleskopischen Befestigung (30) angeordnet ist, und die zumindest eine Achsanordnung (24L, 24R) ferner einen Bolzen (48) der teleskopischen Befestigung (48) umfasst, der durch das Loch (38) in der teleskopischen Befestigung (28) und das entsprechende Loch (40) des Achs-Stützelements (30) steckbar ist, um wahlweise eine Drehung des Achs-Stützelements (30) relativ zur teleskopischen Befestigung (28) zu verhindern.

7. Erntevorsatz (14) nach einem der vorherigen Ansprüche, wobei die teleskopische Befestigung (28) ausfährt, um der Achse (32) und den daran befestigten Rädern (26) zu erlauben, sich unterhalb und relativ zum Rahmen (16) zwischen der Feldarbeitsposition und der Transportposition zu drehen.

8. Erntevorsatz (14) nach einem der vorherigen Ansprüche, wobei die teleskopische Befestigung (28) einen Aktuator (36) umfasst, der im Inneren eines Gehäuses (34) angeordnet ist.

9. Erntevorsatz (14) nach einem der vorherigen Ansprüche, wobei der Rahmen (16) ein linkes Ende und ein rechtes Ende umfasst, wobei die mindestens eine Achsanordnung (24L, 24R) eine linke Achsanordnung (24L) und eine rechte Achsanordnung (24R) umfasst, die entsprechend neben dem linken und dem rechten Ende des Rahmens (16) angeordnet sind, und wobei der Erntevorsatz (14) ferner ein linkes Paar Räder (26), die mit der linken Achsanordnung (24L) verbunden sind, und ein rechtes Paar Räder (26), die mit der rechten Achsanordnung (24R) verbunden sind, aufweist.

10. Erntevorsatz (14) nach Anspruch 9, weiterhin umfassend einen Fluidtank (60), einen linken Fluidzylinder (54L), der wirkend mit dem Fluidtank (60) verbunden ist und mit der linken Achsanordnung (24L) verbunden ist, und einen rechten Fluidzylinder (54R), der wirkend mit dem Fluidtank (60) verbunden ist und mit der rechten Achsanordnung (24R) verbunden ist, wobei der linke und der rechte Fluidzylinder (54L, 54R) in einer entgegengesetzter Weise wirken, um die Räder (26) in der Transportposition zu lenken.

11. Erntevorsatz (14) nach Anspruch 10, wobei der Fluidtank (60) in der Transportposition geschlossen ist, sodass der linke und der rechte Fluidzylinder (54L, 54R) strömungstechnisch in der entgegengesetzten Weise verbunden sind, um die Räder (26) in der Transportposition zu lenken, und der Fluidtank (60) in der Feldarbeitsposition geöffnet ist, sodass der linke und der rechte Fluidzylinder (54L, 54R) strömungstechnisch in einer freien Strömungsweise verbunden sind, sodass die Räder (26) der linken und der rechten Achsanordnung (24L, 24R) in der Feldarbeitsposition zusammenwirken.

12. Erntevorsatz (14) nach Anspruch 10, ferner umfassend eine Zugstange (H), die in der Transportposition abnehmbar mit der linken Achsanordnung (24L) verbunden ist, und ein Gestängesystem (52) mit einer linken Koppelstange (58L), die zwischen der Zugstange (H) und der linken Achsanordnung (24L) verbunden ist, und einer rechten Koppelstange (58L), die mit der rechten Achsanordnung (24R) verbunden ist.

13. Erntevorsatz (14) nach einem der Ansprüche 9 bis 12, wobei die linke Achsanordnung (24L) einen linken Aktuator (56L) umfasst und die rechte Achsanordnung (24R) einen rechten Aktuator (56R) umfasst, und der linke und der rechte Aktuator (56L, 56R) die linken und rechten Räder (26) der linken bzw. rechten Achsanordnung (24L, 24R) in der Feldarbeitsposition gemeinsam lenken.

14. Erntevorsatz (14) nach Anspruch 13, ferner umfassend eine elektrische Steuereinheit (70), die wirkend mit dem linken und dem rechten Aktuator (56L, 56R) der linken und rechten Achsanordnung (24L, 24R) verbunden ist und dazu eingerichtet ist, die linken und rechten Räder (26) der linken und rechten Achsanordnung (24L, 24R) in Verbindung mit einer Bewegung des landwirtschaftlichen Nutzfahrzeuges (10) automatisch zu drehen.

15. Erntevorsatz (14) nach Anspruch 14, wobei die linke Achsanordnung (24L) ferner einen linken Sensor (74L) umfasst, der mit dem linken Aktuator (56L) verbunden ist, und die rechte Achsanordnung (24R) ferner einen rechten Sensor (74R) umfasst, der mit dem rechten Aktuator (56R) verbunden ist, und jeder Sensor (74L, 74R) wirkend mit der elektronischen Steuereinheit (70) verbunden ist und ein entsprechendes Positionssignal an die elektrische Steuereinheit (70) sendet.

## Revendications

1. Tête (14) pour engin agricole (10), comprenant :
un cadre (16) ;
au moins un ensemble essieu (24L, 24R) relié au cadre (16) et pouvant être positionné entre une position de transport et une position de travail dans le champ, l'au moins un ensemble essieu (24L, 24R) comprenant un essieu (32) avec une première et une seconde extrémité ; et
une paire de roues (26) reliées respectivement à la première et à la seconde extrémités de l'essieu (32),
**caractérisée en ce que** :
l'au moins un ensemble essieu (24L, 24R) comprend :
une monture télescopique (28) reliée au cadre (16) ; et
un élément de support d'essieu (30) relié de manière rotative à la monture télescopique (28) ;
l'essieu (32) étant relié de manière coulissante à l'élément de support d'essieu (30) de sorte que l'essieu (32) tourne et glisse par rapport au cadre (16), et les roues (26) sont configurées pour supporter au moins partiellement la tête (14) dans la position de transport et la position de travail dans le champ.

2. Tête (14) selon la revendication 1, dans laquelle le cadre (16) définit un axe longitudinal, l'essieu (32) définit un axe longitudinal d'essieu, l'axe longitudinal d'essieu est parallèle à l'axe longitudinal du cadre (16) dans la position de travail dans le champ, et l'axe longitudinal d'essieu est perpendiculaire à l'axe longitudinal du cadre (16) dans la position de transport.

3. Tête (14) selon la revendication 2, dans laquelle l'essieu (32) glisse par rapport à l'élément de support d'essieu (30) de sorte que l'essieu (32) est centré approximativement autour de la monture télescopique (28) dans la position de travail dans le champ et la seconde extrémité de l'essieu (32) est plus proche de la monture télescopique (28) que la première extrémité dans la position de transport.

4. Tête (14) selon la revendication 3, dans laquelle l'essieu (32) a au moins deux positions indexées comprenant un premier trou (44) situé à un point médian approximatif entre la première extrémité et la seconde extrémité de l'essieu (32) et un second trou (46) situé de manière adjacente à la seconde extrémité de l'essieu (32), et l'élément de support d'essieu (30) comprend un trou (42) situé de manière adjacente à l'essieu (32).

5. Tête (14) selon la revendication 4, dans laquelle l'au moins un ensemble essieu (24L, 24R) comprend en outre une goupille d'essieu (50), et la goupille d'essieu (50) est insérée à travers le premier trou (44) de l'essieu (32) et le trou (42) de l'élément de support d'essieu (30) dans la position de travail dans le champ et la goupille d'essieu (50) est insérée à travers le second trou (46) de l'essieu (32) et le trou (42) de l'élément de support d'essieu (30) dans la position de transport.

6. Tête (14) selon l'une quelconque des revendications précédentes, dans laquelle la monture télescopique (28) comprend en outre un trou (38) et l'élément de support d'essieu (30) comprend en outre un autre trou (40) situé de manière adjacente à la monture télescopique (28) et correspondant au trou (38) de la monture télescopique (28), et l'au moins un ensemble essieu (24L, 24R) comprenant en outre une goupille de monture télescopique (48) pouvant être insérée à travers le trou (38) dans la monture télescopique (48) et le trou correspondant (40) de l'élément de support d'essieu (30) pour empêcher sélectivement une rotation de l'élément de support d'essieu (30) par rapport à la monture télescopique (28).

7. Tête (14) selon l'une quelconque des revendications précédentes, dans laquelle la monture télescopique (28) s'étend pour permettre à l'essieu (32), et aux roues (26) attachées à celui-ci de tourner en dessous du cadre (16) et par rapport à celui-ci entre la position de travail dans le champ et la position de transport.

8. Tête (14) selon l'une quelconque des revendications précédentes, dans laquelle la monture télescopique (28) comprend un actionneur (36) disposé à l'intérieur d'un boîtier (34).

9. Tête (14) selon l'une quelconque des revendications précédentes, dans laquelle le cadre (16) comprend une extrémité gauche et une extrémité droite, l'au moins un ensemble essieu (24L, 24R) comprend un ensemble essieu gauche (24L) et un ensemble essieu droite (24R) respectivement situés de manière adjacente aux extrémités gauche et droite du cadre (16), et la tête (14) comprend en outre une paire de roues gauche (26) reliées à l'ensemble essieu gauche (24L) et une paire de roues droite (26) reliées à l'ensemble essieu droite (24R).

10. Tête (14) selon la revendication 9, comprenant en outre un réservoir de fluide (60) et un cylindre de fluide gauche (54L) relié de manière fonctionnelle au réservoir de fluide (60) et relié à l'ensemble essieu gauche (24L) et un cylindre de fluide droit (54R) relié de manière fonctionnelle au réservoir de fluide (60) et relié à l'ensemble essieu droit (24R), les cylindres de fluide gauche et droit (54L, 54R) agissent d'une manière opposée pour diriger les roues (26) dans la position de transport.

11. Tête (14) selon la revendication 10, dans laquelle le réservoir de fluide (60) est fermé dans la position de transport de sorte que les cylindres de fluide gauche et droit (54L, 54R) sont reliés fluidiquement dans la position opposée pour diriger les roues (26) dans la position de transport, et le réservoir de fluide (60) est ouvert dans la position de travail dans le champ de sorte que les cylindres de fluide gauche et droit (54L, 54R) sont reliés fluidiquement d'une manière libre de sorte que les roues (26) des ensembles essieu gauche et droit (24L, 24R) fonctionnent en tandem dans la position de travail dans le champ.

12. Tête (14) selon la revendication 10, comprenant en outre un dispositif de traction (H) relié de manière amovible à l'ensemble essieu gauche (24L), dans la position de transport, et un système de couplage (52) comprenant un dispositif de couplage gauche (58L) relié entre le dispositif de traction (H) et l'ensemble essieu gauche (24L) et un dispositif de couplage droit (58R) relié à l'ensemble essieu droit (24R).

13. Tête (14) selon l'une quelconque des revendications 9 à 12, dans laquelle l'ensemble essieu gauche (24L) comprend un actionneur gauche (56L) et l'ensemble essieu droite (24R) comprend un actionneur droit (56R), et les actionneurs gauche et droit (56L, 56R) dirigent les roues gauche et droite (26) des ensembles essieu gauche et droit (24L, 24R), respectivement, en tandem dans la position de travail dans le champ.

14. Tête (14) selon la revendication 13, comprenant en outre une unité de commande électronique (70) reliée de manière fonctionnelle aux actionneurs gauche et droit (56L, 56R) des ensembles essieu gauche et droit (24L, 24R) et configurée pour tourner automatiquement les roues gauche et droite (26) des ensembles essieu gauche et droit (24L, 24R) en lien avec un mouvement de l'engin agricole (10).

15. Tête (14) selon la revendication 14, dans laquelle l'ensemble essieu gauche (24L) comprend en outre un capteur gauche (74L) relié à l'actionneur gauche (56L) et l'ensemble essieu droit (24R) comprend en outre un capteur droit (74R) relié à l'actionneur droit (56R), et chaque capteur (74L, 74R) étant relié de manière fonctionnelle à l'unité de commande électronique (70) et émettant un signal de position respectif à l'unité de commande électronique (70).
